# EUROPÄISCHE PATENTSCHRIFT

(11) **EP 2 732 996 B1**
(45) Veröffentlichungstag und Bekanntmachung des Hinweises auf die Patenterteilung: **17.06.2015**
(21) Anmeldenummer: 13192453.2
(22) Anmeldetag: 12.11.2013
(51) Int. Cl.: B60H 1/22, F28D 7/10, F28D 7/12, F28F 9/02, F28D 21/00

(54) **Wärmetauscheranordnung, insbesondere für ein Fahrzeugheizgerät**
Heat exchange arrangement in particular for a heating system of a vehicle
Arrangement d'échange de chaleur en particulier pour système de chauffage de véhicule

(30) Priorität: 14.11.2012 DE 102012220792
(43) Veröffentlichungstag der Anmeldung: 21.05.2014
(73) Patentinhaber: Eberspächer Climate Control Systems GmbH & Co. KG, 73730 Esslingen (DE)
(72) Erfinder: Humburg, Michael, 73035 Göppingen (DE)
(74) Vertreter: RLTG

(56) Entgegenhaltungen:
- EP-A1- 2 489 534
- DE-A1- 3 341 490
- DE-C1- 10 143 479

## Beschreibung

Die vorliegende Erfindung betrifft eine Wärmetauscheranordnung, insbesondere für ein Fahrzeugheizgerät, umfassend ein in Richtung einer Gehäuselängsachse sich erstreckendes topfartiges Wärmetauschergehäuse mit einer Außenwandung und einer Innenwandung, wobei zwischen der Außenwandung und der Innenwandung ein Wärmeträgermediumströmungsraum gebildet ist, wobei an der Außenwandung wenigstens ein zu dem Wärmeträgermediumströmungsraum offener Wärmeträgermediumdurchströmungsstutzen vorgesehen ist und wobei an dem Wärmetauschergehäuse ein zu einem von der Innenwandung umgebenen Innenraum des Wärmetauschergehäuses offener Abgasdurchströmungsstutzen vorgesehen ist, wobei das Wärmetauschergehäuse ein äußeres Gehäuseteil mit einer Außenumfangswandung und einer Außenbodenwandung sowie ein inneres Gehäuseteil mit einer Innenumfangswandung und einer Innenbodenwandung umfasst, gemäß dem Oberbegriff des Anspruchs 1.

Aus der EP 0 916 908 B1 ist eine Wärmetauscheranordnung für ein Fahrzeugheizgerät bekannt, welche ein grundsätzlich topfartig ausgebildetes Wärmetauschergehäuse aufweist. Ein äußeres Gehäuseteil dieses Wärmetauschergehäuses ist mit einer Außenunfangswandung und einer Außenbodenwandung ausgebildet. Ein inneres Gehäuseteil des topfartigen Wärmetauschergehäuses weist eine Innenumfangswandung und eine Innenbodenwandung auf und ist in das äußere Gehäuseteil eingesetzt, so dass es zusammen mit diesen einen Wärmeträgermediumströmungsraum begrenzt. An dem von der Außenbodenwandung bzw. der Innenbodenwandung entfernt liegenden Endbereich des inneren Gehäuseteils ist dieses mit einem die Innenumfangswandung umgebenden, im Wesentlichen ringartig ausgebildeten und an die Innenumfangswandung im axialen Endbereich derselben angebundenen Außenumfangswandungsabschnitt ausgebildet, an welchen die Außenumfangswandung des äußeren Gehäuseteils fluiddicht angebunden ist. Dieser Außenumfangswandungsabschnitt begrenzt zusammen mit dem im selben axialen Bereich, bezogen auf eine Gehäuselängsachse des topfartigen Wärmetauschergehäuses, liegenden Abschnitt der Innenumfangswandung einen ringartigen Zwischenraum, welcher einen Teil des Wärmeträgermediumströmungsraums bereitstellt und nach radial außen nicht durch die Außenumfangswandung des äußeren Gehäuseteils abgeschlossen ist.

Am inneren Gehäuseteil ist im axialen Bereich des Außenumfangswandungsabschnitts, also im axialen Bereich, in welchem der einen Teil des Wärmeträgermediumströmungsraums bildende ringartige Zwischenraum gebildet ist, ein Abgasdurchströmungsstutzen vorgesehen. Dieser durchsetzt den ringartigen Zwischenraum und ist durch die den ringartigen Zwischenraum nach radial innen begrenzende Innenumfangswandung hindurch zu einem von der Innenwandung umgebenen Innenraum des Wärmetauschergehäuses offen. Bei Integration in ein Fahrzeugheizgerät wird dieser Innenraum des Wärmetauschergehäuses von Verbrennungsabgasen durchströmt, so dass das innere Wärmetauschergehäuse Wärme aus den Verbrennungsabgasen aufnehmen kann und diese auf im Wärmeträgermediumströmungsraum strömendes Wärmeträgermedium, also beispielsweise Wasser, übertragen kann. Die Verbrennungsabgase verlassen diesen Innenraum durch den den ringartigen Zwischenraum zwischen dem Außenumfangswandungsabschnitt und der Innenumfangswandung durchsetzenden Abgasdurchströmungsstutzen.

An der Außenumfangswandung des äußeren Gehäuseteils sind dort, wo dieser an die Außenbodenwandung angrenzt, Wärmeträgermediumdurchströmungsstutzen vorgesehen, welche zum Wärmeträgermediumströmungsraum offen sind und somit die Zufuhr bzw. die Abfuhr von Wärmeträgermedium in den bzw. aus dem Wärmeträgermediumströmungsraum ermöglichen. Die Wärmeträgermediumdurchströmungsstutzen liegen beispielsweise im gleichen Umfangsbereich, wie der am inneren Gehäuseteil vorgesehene Abgasdurchströmungsstutzen.

Die EP 2 489 534 A1 offenbart eine Wärmetauscheranordnung für ein Fahrzeugheizgerät gemäß dem Oberbegriff des Anspruchs 1. Bei dieser Wärmetauscheranordnung ist ein Wärmetauschergehäuse topfartig ausgebildet mit einer Außenwandung und einer Innenwandung und einem dazwischen gebildeten Wärmeträgermediumströmungsraum. An einer Außenumfangswandung sind in einem von einer Außenbodenwandung entfernten axialen Endbereich Wärmeträgermediumdurchströmungsstutzen vorgesehen. Im gleichen axialen Bereich, jedoch an gegenüberliegender Umfangspositionierung ist ein Abgasdurchströmungsstutzen vorgesehen, der zu einem von einer Innenumfangswandung und einer Innenbodenwandung umschlossenen und von Verbrennungsabgasen durchströmbaren Innenraum offen ist.

Es ist die Aufgabe der vorliegenden Erfindung, eine Wärmetauscheranordnung, insbesondere für ein Fahrzeugheizgerät bereitzustellen, welches bei einfachem Aufbau einfach zu fertigen ist.

Erfindungsgemäß wird diese Aufgabe gelöst durch eine Wärmetauscheranordnung, insbesondere für ein Fahrzeugheizgerät, umfassend ein in Richtung einer Gehäuselängsachse-sich erstreckendes topfartiges Wärmetauschergehäuse mit einer Außenwandung und einer Innenwandung, wobei zwischen der Außenwandung und der Innenwandung ein Wärmeträgermediumströmungsraum gebildet ist, wobei an der Außenwandung wenigstens ein zu dem Wärmeträgermediumströmungsraum offener Wärmeträgermediumdurchströmungsstutzen vorgesehen ist und wobei an dem Wärmetauschergehäuse ein zu einem von der Innenwandung umgebenen Innenraum des Wärmetauschergehäuses offener Abgasdurchströmungsstutzen vorgesehen ist, wobei das Wärmetauschergehäuse ein äußeres Gehäuseteil mit einer Außenumfangswandung und einer Außenbodenwandung sowie ein inneres Gehäuseteil mit einer Innenumfangswandung und einer Innenbodenwandung umfasst.

Dabei ist weiter vorgesehen, dass wenigstens ein Wärmeträgermediumdurchströmungsstutzen an einem von der Außenbodenwandung entfernten axialen Endbereich der Außenumfangswandung des äußeren Gehäuseteils vorgesehen ist.

Bei dem erfindungsgemäßen Aufbau einer Wärmetauscheranordnung ist der wenigstens eine Wärmeträgermediumdurchströmungsstutzen in einem axialen Bereich der Außenumfangswandung vorgesehen, welcher nahe dem offenen Ende des allgemein auch mit topfartiger Struktur bereitgestellten äußeren Gehäuseteils liegt und somit beim Fertigungsvorgang leicht zugänglich ist. Da derartige Gehäuseteile im Allgemeinen in einem Gießverfahren hergestellt werden und insofern Gießformen ineinander eingesetzt werden müssen, wird es durch das Bereitstellen des wenigstens einen Wärmeträgermediumdurchströmungsstutzens an dem von der Außenbodenwandung entfernt liegenden axialen Endbereich der Außenumfangswandung leicht möglich, den Wärmeträgermediumdurchströmungsstutzen als integralen Bestandteil des äußeren Gehäuseteils bereitzustellen und nach Durchführung eines Gießvorgangs die hierfür erforderlichen Formteile in einfacher Weise voneinander zu lösen.

Um unter Berücksichtigung des Umstandes, dass der Abgasdurchströmungsstutzen am inneren Gehäuseteil vorgesehen ist, den von der Außenumfangswandung des äußeren Gehäuseteils umgrenzten Wärmeträgermediumströmungsraum mit vergleichsweise großem Volumen bereitstellen zu können, ist ferner vorgesehen, dass in einem ersten Umfangsbereich der Außenumfangswandung die Außenumfangswandung mit größerer Erstreckungslänge von der Außenbodenwandung und in einem zweiten Umfangsbereich der Außenumfangswandung die Außenumfangswandung mit einer geringeren Erstreckungslänge von der Außenbodenwandung ausgebildet ist, wobei der wenigstens eine Wärmeträgermediumdurchströmungsstutzen im Bereich des ersten Umfangsbereichs vorgesehen ist.

Um eine zuverlässige Durchströmung des Wärmeträgermediumströmungsraums erzeugen zu können, wird vorgeschlagen, dass an der Außenumfangswandung zwei Wärmeträgermediumdurchströmungsstutzen im Wesentlichen im gleichen axialen Bereich der Außenumfangswandung in Umfangsabstand zueinander vorgesehen sind. Dabei kann dann einer der Strömungsstutzen zur Wärmeträgermediumzufuhr und der andere zur Wärmeträgermediumabfuhr genutzt werden.

Da zur Bereitstellung des topfartigen Wärmetauschergehäuses das äußere Gehäuseteil und das innere Gehäuseteil ineinander einzufügen sind, ist es besonders vorteilhaft, wenn der wenigstens eine Wärmeträgermediumdurchströmungsstutzen und der Abgasdurchströmungsstutzen im gleichen axialen Bereich des Wärmetauschergehäuses um den Umfangsabstand vorgesehen ist. Ein gegenseitiges Stören der beiden Gehäuseteile beim Einschieben ineinander wird dadurch vermieden. Gleichzeitig wird an der Wärmetauscheranordnung in einem axialen Bereich ein Anschlussbereich bereitgestellt, was eine platzsparende Unterbringung beispielsweise in einem Fahrzeug bei leichter Zugänglichkeit für anzuschließende Rohrleitungen ermöglicht.

Beispielsweise kann vorgesehen sein, dass die Außenumfangswandung in ihrem von der Außenbodenwandung entfernt liegenden axialen Endbereich bezüglich der Gehäuselängsachse schräg endet. Alternativ wäre selbstverständlich auch ein stufenartiger Übergang zwischen den Umfangsbereichen mit verschiedener Erstreckungslänge ausgehend von der Außenbodenwandung möglich.

Die Durchführung eines Gießvorgangs mit Einsatz entsprechender Gießformen zur Bereitstellung eines an der Außenumfangswandung integral ausgebildeten Wärmeträgermediumdurchströmungsstutzens kann dann in besonders einfacher Weise erfolgen, wenn der wenigstens eine Wärmeträgermediumdurchströmungsstutzen im Wesentlichen vollständig in einem axial über den zweiten Umfangsbereich der Außenumfangswandung hinaus ragenden Bereich der Außenumfangswandung im ersten Umfangsbereich vorgesehen ist.

Um durch das innere Gehäuseteil bzw. die Innenumfangswandung desselben den Wärmeträgermediumströmungsraum so in axialer Richtung begrenzen zu können, dass am inneren Gehäuseteil ausreichend Bauraum zur Bereitstellung des Abgasdurchströmungsstutzens vorgesehen ist, wird vorgeschlagen, dass an der Innenumfangswandung des inneren Gehäuseteils eine den Wärmeträgermediumströmungsraum in axialer Richtung begrenzende Stirnfläche vorgesehen ist, wobei die Stirnfläche in einem ersten Umfangsbereich der Innenumfangswandung einen größeren axialen Abstand zur Innenbodenwandung aufweist und in einem zweiten Umfangsbereich der Innenumfangswandung einen geringeren axialen Abstand zur Innenbodenwandung aufweist. Dabei kann die Stirnfläche beispielsweise bezüglich der Gehäuselängsachse schräg angeordnet sein. Alternativ könnte auch hier ein gestufter Übergang zwischen den Bereichen unterschiedlichen axialen Abstands zur Innenbodenwandung vorgesehen sein. Das äußere Gehäuseteil kann im Bereich der Stirnfläche mit dem inneren Gehäuseteil verbunden sein und der Abgasdurchströmungsstutzen ist vorzugsweise an der Innenumfangswandung im Bereich des zweiten Umfangsbereichs der Innenumfangswandung vorgesehen, also dort, wo durch entsprechende axiale Begrenzung des Wärmeträgermediumströmungsraums ausreichend axialer Bauraum am inneren Gehäuseteil vorgesehen ist, um eine zum Innenraum des Wärmetauschergehäuses führende Öffnung bereitstellen zu können.

Die Stirnfläche kann an der Innenumfangswandung durch eine vorzugsweise stufenartige Dickenzunahme derselben bereitgestellt sein, wobei hier vorteilhafterweise, jedoch nicht notwendigerweise, eine senkrechte Stufe gebildet sein kann. Auch ein gekrümmter Übergang in die Stirnfläche bzw. einen Bereich größerer Dicke der Innenumfangswandung kann zur Bereitstellung einer Dickenzunahme und somit zur Bereitstellung der Stirnfläche vorgesehen sein.

Die erfindungsgemäße Wärmetauscheranordnung wird im Allgemeinen an dem von den Bodenwandungen der beiden Gehäuseteile entfernten axialen Endbereich des topfartigen Wärmetauschergehäuses mit anderen Baugruppen, insbesondere einem Brennerbereich, verbunden. Um dort einen gegen Austritt von Abgasen fluiddichten Abschluss in einfacher Weise bereitstellen zu können, wird vorgeschlagen, dass die Innenumfangswandung in ihrem von der Innenbodenwandung entfernten axialen Endbereich im Wesentlichen orthogonal zur Gehäuselängsachse endet.

Bei einer aus fertigungstechnischen Gründen besonders vorteilhaften Ausgestaltung wird vorgeschlagen, dass der Wärmeträgermediumströmungsraum nach radial außen im Wesentlichen nur durch die Außenumfangswandung des äußeren Gehäuseteils begrenzt ist. Es müssen dabei also keine Hinterschneidungsbereiche am inneren Gehäuseteil bereitgestellt werden, um, ähnlich wie dies bei dem eingangs zitierten Stand der Technik durch das Bereitstellen eines Außenumfangswandungsabschnitts am inneren Gehäuseteil erfolgt, einen Teil des Wärmeträgermediumströmungsraums allein durch das innere Gehäuseteil zu begrenzen. Somit durchsetzt der Abgasdurchströmungsstutzen nicht, wie dies beim Stand der Technik der Fall ist, den am inneren Wärmetauschergehäuse gebildeten Ringraum, sondern er liegt außerhalb des Wärmeträgermediumströmungsraums. Dies führt möglicherweise zu einer Beeinträchtigung der Wärmeübertragungseffizienz, ermöglicht jedoch eine wesentlich einfachere Herstellung des inneren Gehäuseteils mit dem integral daran vorgesehenen Abgasdurchströmungsstutzen in einem Gießverfahren.

Wie bereits vorangehend dargelegt, kann durch die erfindungsgemäße Ausgestaltung des Wärmetauschergehäuses in besonders einfacher Weise vorgesehen sein, dass dass äußere Gehäuseteil mit dem wenigstens einen Wärmeträgermediumdurchströmungsstutzen integral ausgebildet ist oder/und dass das innere Gehäuseteil mit dem Abgasdurchströmungsstutzen integral ausgebildet ist.

Bei dem erfindungsgemäßen Aufbau kommt im Wesentlichen nur das innere Gehäuseteil mit den vergleichsweise heißen Verbrennungsabgasen in Kontakt. Aus diesem Grunde ist es vorteilhaft, dieses als Metall-Druckgussteil, beispielsweise aufgebaut mit Aluminiummaterial, bereitzustellen. Das äußere Gehäuseteil wird mit derart hohen Temperaturen im Allgemeinen nicht belastet, so dass aus Kostengründen und zur Gewichtseinsparung dieses vorteilhafterweise als Kunststoff-Spritzgussteil bereitgestellt werden kann.

Die Erfindung betrifft ferner ein Fahrzeugheizgerät, umfassend einen mit Brennstoff und Verbrennungsluft zu speisenden Brennerbereich und eine Wärmetauscheranordnung nach einem der vorhergehenden Ansprüche.

Die Erfindung wird nachfolgend mit Bezug auf die beiliegenden Figuren detailliert beschrieben. Es zeigt:
- Fig. 1: ein topfartiges Wärmetauschergehäuse mit einem äußeren Gehäuseteil und einem inneren Gehäuseteil in Explosionsdarstellung und in Seitenansicht;
- Fig. 2: eine Ansicht des äußeren Gehäuseteils in Blickrichtung II in Fig. 1;
- Fig. 3: eine Ansicht des äußeren Gehäuseteils in Blickrichtung III in Fig. 2;
- Fig. 4: eine Ansicht des äußeren Gehäuseteils in Blickrichtung IV in Fig. 2.

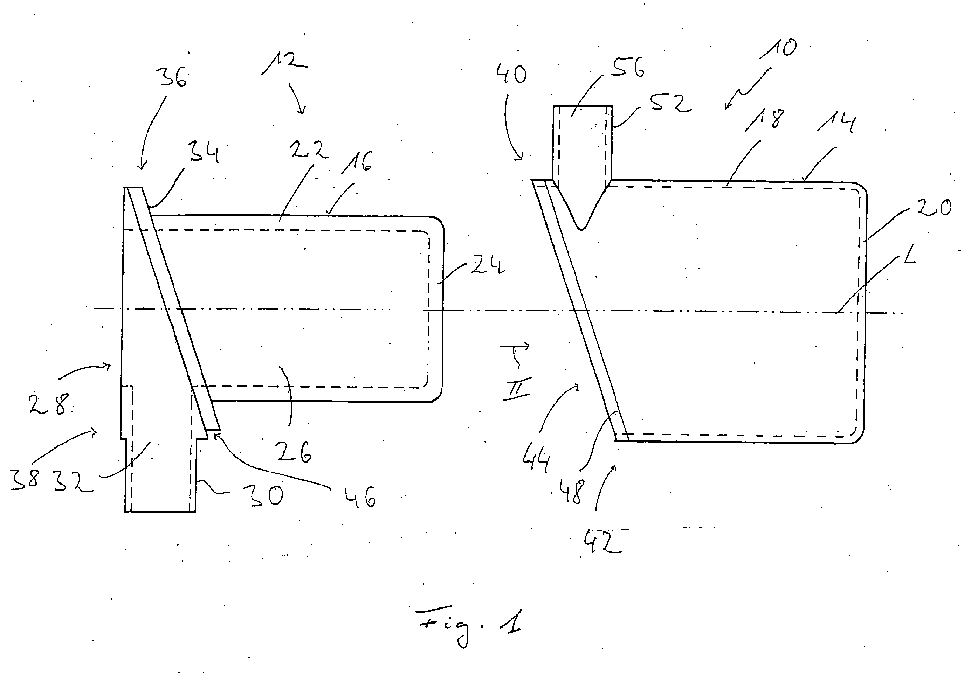

In Fig. 1 ist ein in Explosionsdarstellung gezeigtes Wärmetauschergehäuse einer Wärmetauscheranordnung 10 allgemein mit 12 bezeichnet. Das mit topfartiger Struktur entlang einer Gehäuselängsachse L sich erstreckend ausgebildete Wärmetauschergehäuse 12 umfasst ein äußeres Gehäuseteil 14 sowie ein inneres Gehäuseteil 16. Das äußere Gehäuseteil 14 und das innere Gehäuseteil 16 sind jeweils ebenfalls mit im Wesentlichen topfartiger Struktur bereitgestellt.

Das äußere Gehäuseteil 14 umfasst eine in Fig. 1 auch mit Strichlinie angedeutete Außenumfangswandung 18 und eine Außenbodenwandung 20. Das innere Gehäuseteil 16 umfasst, ebenfalls mit Strichlinie angedeutet, eine Innenumfangswandung 22 und eine Innenbodenwandung 24. Im zusammengefügten Zustand des Wärmetauschergehäuses 12 ist das inneren Gehäuseteil 16 in das äußere Gehäuseteil 14 eingesetzt und begrenzt zusammen mit diesem einen Wärmeträgermediumströmungsraum. Das innere Gehäuseteil 16 umgrenzt einen Innenraum 26 des Wärmetauschergehäuses 12, in welchem sich bei Integration einer derartigen Wärmetauscheranordnung 10 beispielsweise in ein Fahrzeugheizgerät ein von einem Brennerbereich ausgehendes Flammrohr hinein erstreckt. Die im Verbrennungsbetrieb generierten Verbrennungsabgase strömen durch das Flammrohr auf die Innenbodenwandung 24 zu und werden dort nach radial außen bezüglich der Gehäuselängsachse L umgelenkt. Sie strömen dann zwischen dem in Fig. 1 nicht dargestellten Flammrohr und der Innenumfangswandung 22 zurück zu einem von der Innenbodenwandung 24 entfernt liegenden axialen Endbereich 28 der Innenumfangswandung 22. In diesem Endbereich 28 endet das innere Gehäuseteil 16 bzw. die Innenumfangswandung 22 im Wesentlichen orthogonal zur Gehäuselängsachse L, so dass in einfacher Weise das innere Gehäuseteil 16 bzw. die Wärmetauscheranordnung 10 zur Erzeugung eines dichten Abschlusses des Abgasströmungsraums beispielsweise an den Brennerbereich eines Fahrzeugheizgeräts angebunden werden kann. Die Verbrennungsabgase verlassen den Innenraum 26 durch eine die Innenumfangswandung 22 durchsetzende und auch in einem Abgasdurchströmungsstutzen 30 ausgebildete Abgasauslassöffnung 32.

Am inneren Gehäuseteil 16 bzw. der Innenumfangswandung 22 desselben ist nahe dem axialen Endbereich 28 eine den Wärmeträgermediumströmungsraum in dem von den beiden Bodenwandungen 20, 24 entfernten axialen Bereich begrenzende Strinfläche 34 vorgesehen. Diese Stirnfläche 34 kann beispielsweise durch stufenartige Dickenzunhame der Innenumfangswandung 22 bereitgestellt werden. Man erkennt in Fig. 1 deutlich, dass die Stirnfläche 34, welche die Gehäuselängsachse L im Wesentlichen ringartig umgibt, bezüglich der Gehäuselängsachse L schräg gestellt ist, so dass bei allgemein kreisartiger Ausgestaltung der Innenumfangswandung 22 im Bereich von deren Außenumfangsfläche die Stirnfläche 34 eine allgemein elliptische Konfiguration annimmt. Dabei kann, wie dies in Fig. 1 gezeigt ist, die Stirnfläche 34 im Wesentlichen plan, also in einer zur Gehäuselängsachse L schräg gestellten Ebene liegen. Auch eine Anstellung oder teilweise Anstellung der Stirnfläche 34 zu einer derartigen Ebene, beispielsweise eine konische Ausgestaltung der Stirnfläche 34, ist möglich. Unabhängig davon, ob die Stirnfläche plan oder beispielsweise konisch angestellt oder ggf. auch gekrümmt ausgebildet ist, ist deren Grundanordnung derart, dass sie mit ihrre allgemein ringartig um die Gehäuselängsachse L umlaufenden Struktur bezüglich der Gehäuselängsachse L schräg gestellt ist.

Durch die Schrägstellung der Stirnfläche 34 bezüglich der Gehäuselängsachse L wird eine derartige Konfiguration erhalten, dass in einem ersten Umfangsbereich 36 der Innenumfangswandung 16 die Stirnfläche 34 einen größeren Axialabstand zur Innenbodenwandung 24 aufweist, als in einem dem ersten Umfangsbereich 36 der Innenumfangswandung 22 bezüglich der Gehäuselängsachse L im Wesentlichen diametral gegenüberliegenden zweiten Umfangsbereich 38. Somit erhält der durch die Dickenzunahme der Innenumfangswandung 22 generierte Bereich des inneren Gehäuseteils 26 bei der in Fig. 1 erkennbaren Seitenansicht eine allgemein keilartige Konfiguration.

In Entsprechung zu dieser Schrägstellung der den Wärmeträgermediumströmungsraum axial begrenzenden Stirnfläche 34 am inneren Gehäuseteil 16 ist die Außenumfangswandung 18 des äußeren Gehäuseteils 14 so gestaltet, dass sie in einem ersten Umfangsbereich 40 der Außenumfangswandung 18 eine größere Axialerstreckung ausgehend von der Außenbodenwandung 22 aufweist, als in einem bezüglich der Gehäuselängsachse L dem ersten Umfangsbereich 40 der Außenumfangswandung 18 im Wesentlichen diametral gegenüberliegenden zweiten Umfangsbereich 42 der Außenumfangswandung 18. Dies bedeutet, dass die Außenumfangswandung 18 in einem von der Außenbodenwandung 20 entfernt liegenden axialen Endbereich 44 derselben schräg endet, wobei hier im Wesentlichen der gleiche Neigungswinkel bezüglich der Gehäuselängsachse L vorgesehen ist, wie bei der Stirnfläche 34. Im zusammengefügten Zustand schließt die Außenumfangswandung 18 mit ihrem axialen Endbereich 44 an die Innenumfangswandung 22 im Bereich der daran gebildeten Dickenzunahme bzw. Zunahme der Außenumfangsabmessung zur Bereitstelung der Stirnfläche 34 an. Hierzu kann axial anschließend an die Stirnfläche eine Verbindungsstufe 46 gebildet sein, auf welche die Außenumfangswandung 18 des äußeren Gehäuseteils 14 zur Erzeugung einer definierten Relativpositionierung bzw. einer Zentrierung der beiden Gehäuseteile 14, 16 bezüglich einander aufgeschoben werden kann. Die Verbindung der beiden Gehäuseteile 14, 16 kann vorteilhafterweise materialschlüssig, beispielsweise durch Verklebung, erfolgen, wodurch gleichzeitig auch ein fluddichter Abschluss des durch die beiden Gehäuseteile 14 und 16 umgrenzten Wäreträgermediumströmungsraums gebildet ist. In Entsprechung zur Verbindungsstufe 46 an der Innenumfangswadnung 22 kann eine komplementäre Verbindungsstufe 48 am äußeren Gehäuseteil 18 gebildet sein, was zu einer vergrößerten Verbindungsfläche und einer zusätzlichen labyrinthartigen Dichtungskonfiguration beitragen kann.

Mit dem vorangehend beschriebenen Aufbau wird erreicht, dass der zwischen den beiden Gehäuseteilen 14, 16 gebildete Wärmeträgermediumströmungsraum nach radial innen ausschließlich durch die Innenumfangswandung 22 begrenzt ist, nämlich mit ihrem an die Strinfläche 34 anschließenden Erstreckungsabschnitt bis zur Innenbodenwandung 24 hin, dass der Wärmeträgermediumströmungsraum des Weiteren in axialer Richtung an dem von den beiden Bodenwandungen 20, 24 entfernt liegenden, axialen Endbereich ausschließlich durch das innere Gehäuseteil 16, nämlich durch die durch radiale Erweiterung der Innenumfangswandung 22 bereitgestellte Stirnfläche 34, und dass der Wärmeträgermediumströmungsraum nach radial außen im Wesentlichen ausschließlich durch die Außenumfangswandung 18 des äußeren Gehäuseteils 14 begrenzt ist. Es sind somit am inneren Gehäuseteil 16 nicht notwendigerweise Hinterschneidungsbereiche gebildet, welche Bereiche des inneren Gehäuseteils 16 den Wärmeträgermediumströmungsraum nach radial außen bezüglich der Gehäuselängsachse L begrenzen, was den Herstellungsvorgang in einem Gießverfahren deutlich vereinfacht. Gleichwohl sei ausgeführt, dass das Bereitstellen derartiger Hinterschneidungsbereiche beispielsweise nahe dem ersten Umfangsbereich 36 der Innenumfangswandung 22, beispielsweise sofern dies aus Gründen der Strömungsführung vorteilhaft ist, nicht ausgeschlossen sein soll. Weitestgehend ist jedoch der an die Stirnfläche 34 anschließende radial erweiterte Bereich der Innenumfangswandung 22 frei von derartigen Hinterschneidungen, so dass, wie im Folgenden noch dargelegt, der Abgasdurchströmungsstutzen 30 tatsächlich auch außerhalb des Wärmeträgermediumströmungsraums liegt, diesen also nicht durchsetzt.

Diese Positionierung des Abgasdurchströmungsstutzens 30 kann dadurch erlangt werden, dass, wie in Fig. 1 deutlich sichtbar, der Abgasdurchströmungsstutzen 30 im zweiten Umfangsbereich 38 der Innenumfangswandung 22 positioniert ist, also in einem Bereich, der zumindest in diesem Umfangsbereich der gesamten Wärmetauscheranordnung 10 außerhalb des Wärmeträgermediumströmungsraums liegt.

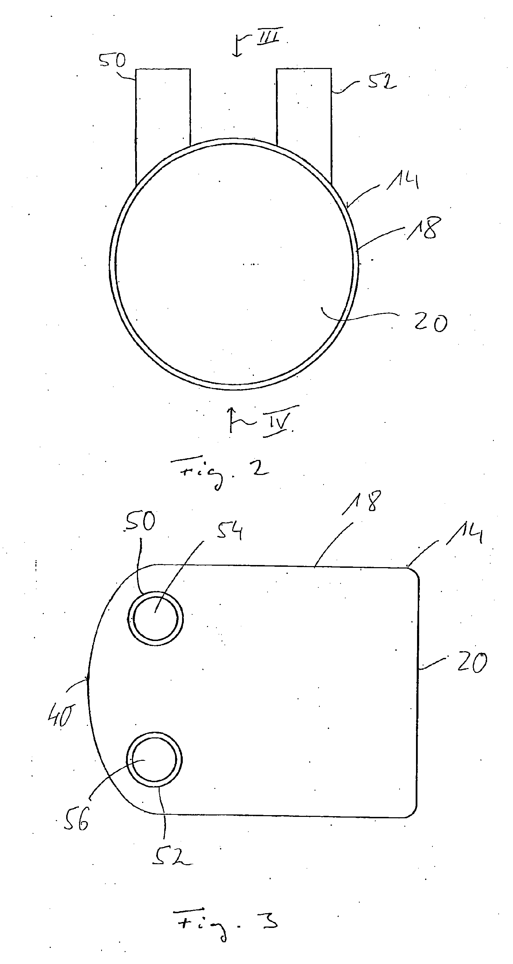

Am äußeren Gehäuseteil 14 sind zur Zufuhr von Wärmeträgermedium in den Wärmeträgermediumströmungsraum zwei in den Fig. 2 und 3 auch erkennbare Wärmeträgermediumdurchströmungsstutzen 50, 52 vorgesehen. Diese bilden jeweils zum Wärmeträgermediumströmungsraum führende Öffnungen 54, 56 und können zur Zufuhr von beispielsweise flüssigem Wärmeträgermedium zu dem Wärmeträgermediumströmungsraum und zur Abfuhr von Wärmeträgermedium aus dem Wärmeträgermediumströmungsraum mit jeweiligen Rohrleitungen verbunden werden. Die beiden Wärmeträgermediumdurchströmungsstutzen können sich dabei vorteilhafterweise im Wesentlichen parallel zueinander mit Umfangsabstand ausgehend von der Außenumfangswandung 18 weg erstrecken.

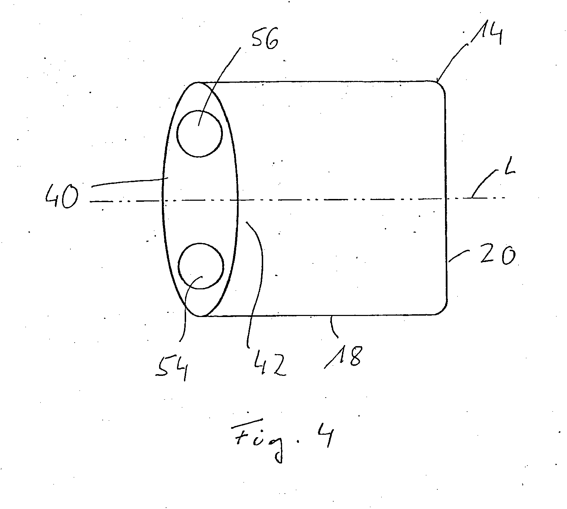

Die beiden Wärmeträgermediumdurchströmungsstutzen 50, 52 sind an der Außenumfangswandung 18 im Bereich von deren erstem Umfangsbereich 40 vorgesehen, also in einem Bereich, in welchem die Außenumfangswandung 18 eine vergleichsweise große Erstreckungslänge ausgehend von der Außenbodenwandung 20 aufweist. Dabei liegen vorteilhafterweise die beiden Wärmeträgermediumdurchströmungsstutzen 50, 52 in einem axialen Bereich der Außenumfangswandung 18 im ersten Umfangsbereich 40 derselben, der sich über den bezüglich der Gehäuselängsachse L diametral gegenüberliegenden zweiten Umfangsbereich 42 der Außenumfangswandung 18 axial im Wesentlichen vollständig hinaus erstreckt. Dies führt dazu, dass bei der in Fig. 4 dargestellten Seitenansicht des äußeren Gehäuseteils 14 die beiden Öffnungen 54, 56 nicht von dem bezüglich der Gehäuselängsachse L gegenüberliegenden Bereich der Außenumfangswandung 18 axial überdeckt sind. Bei Herstellung des äußeren Gehäuseteils 14 in einem Gießverfahren ist es somit sehr einfach möglich, Gießformteile einzusetzen bzw. nach Durchführung des Gießvorgangs zu entfernen, welche zum Bereitstellen der Öffnungen 54, 56 bzw. der diese auch umschließenden Wärmeträgermediumdurchströmungsstutzen 50, 52 erforderlich sind.

Im zusammengesetzten Zustand der beiden Gehäuseteile 14, 16 liegen die beiden Wärmeträgermediumdurchströmungsstutzen 50, 52 mit ihren Öffnungen 54, 56 in einem Umfangsbereich des Wärmetauschergehäuses 12, welcher demjenigen Umfangsbereich, in welchem der Abgasdurchströmungsstutzen 30 liegt, bezüglich der Gehäuselängsachse L gegenüberliegt bzw. diametral entgegengesetzt liegt. Aufgrund des Umstandes, dass das äußere Gehäuseteil 14 in seinem axialen Endbereich 44 schräg endet, liegen die beiden Wärmeträgermediumdurchströmungsstutzen 50, 52 im zusammengesetzten Zustand im Wesentlichen im gleichen axialen Bereich, wie der am inneren Gehäuseteil 16 ausgebildete Abgasdurchströmungsstutzen 30. Im Wesentlichen im gleichen axialen Bereich bedeutet hierbei, dass die Wärmeträgermediumdurchströmungsstutzen 50, 52 und der Abgasdurchströmungsstutzen 30 sich in axialer Richtung zumindest bereichsweise, vorzugsweise mit dem größeren Teil ihrer Axialerstreckung in axialer Richtung überlappen. Aufgrund des Umstandes, dass diese beiden Arten von Stutzen an unterschiedlichen Umfangspositionen des Wärmetauschergehäuses 12 vorgesehen sind, ist dies problemlos möglich. Es wird somit am Wärmetauschergehäuse 12 in axialem Abstand zu den beiden Bodenwandungen 20, 24 ein Anschlussbereich gebildet, in welchem einerseits Rohrleitungen zur Zufuhr bzw. Abfuhr des Wärmeträgermediums angeschlossen werden können und andererseits eine Rohrleitung eines Abgasführungssystems angeschlossen werden kann.

Mit dem erfindungsemäßen Aufbau wird es leicht möglich, die beiden Gehäuseteile 14, 16 jeweils mit den integral daran vorgesehenen Stutzen 30 bzw. 50, 52 in einem Gießverfahren herzustellen. Dabei kann das innere Gehäuseteil 16 in einem Metall-Druckgussverfahren, beispielsweise mit Aluminiummaterial, hergestellt werden, so dass die vergleichsweise hohen Abgastemperaturen dieses inneren Gehäuseteil 16 nicht beschädigen können. Das weniger stark thermisch belastete äußere Gehäuseteil 14 kann aus Kunststoffmaterial in einem Spritzgussverfahren hergestellt werden.

## Patentansprüche

1. Wärmetauscheranordnung, insbesondere für ein Fahrzeugheizgerät, umfassend ein in Richtung einer Gehäuselängsachse (L) sich erstreckendes topfartiges Wärmetauschergehäuse (12) mit einer Außenwandung (18, 20) und einer Innenwandung (22, 24), wobei zwischen der Außenwandung (18, 20) und der Innenwandung (22, 24) ein Wärmeträgermediumströmungsraum gebildet ist, wobei an der Außenwandung (18, 20) wenigstens ein zu dem Wärmeträgermediumströmungsraum offener Wärmeträgermediumdurchströmungsstutzen (50, 52) vorgesehen ist und wobei an dem Wärmetauschergehäuse (12) ein zu einem von der Innenwandung (22, 24) umgebenen Innenraum (26) des Wärmetauschergehäuses (12) offener Abgasdurchströmungsstutzen (30) vorgesehen ist, wobei das Wärmetauschergehäuse (12) ein äußeres Gehäuseteil (14) mit einer Außenumfangswandung (18) und einer Außenbodenwandung (20) sowie ein inneres Gehäuseteil (16) mit einer Innenumfangswandung (22) und einer Innenbodenwandung (24) umfasst, wobei wenigstens ein Wärmeträgermediumdurchströmungsstutzen (50, 52) an einem von der Außenbodenwandung entfernten axialen Endbereich (44) der Außenumfangswandung (18) des äußeren Gehäuseteils (14) vorgesehen ist,
**dadurch gekennzeichnet, dass** in einem ersten Umfangsbereich (40) der Außenumfangswandung (18) die Außenumfangswandung (18) mit größerer Erstreckungslänge von der Außenbodenwandung (20) und in einem zweiten Umfangsbereich (42) der Außenumfangswandung (18) die Außenumfangswandung (18) mit'einer geringeren Erstreckungslänge von der Außenbodenwandung (20) ausgebildet ist, wobei der wenigstens eine Wärmeträgermediumdurchströmungsstutzen (50, 52) im Bereich des ersten Umfangsbereichs (40) vorgesehen ist.

2. Wärmetauscheranordnung nach Anspruch 1,
**dadurch gekennzeichnet, dass** an der Außenumfangswandung (18) zwei Wärmeträgermediumdurchströmungsstutzen (50, 52) im Wesentlichen im gleichen axialen Bereich der Außenumfangswandung (18) in Umfangsabstand zueinander vorgesehen sind.

3. Wärmetauscheranordnung nach Anspruch 1 oder 2,
**dadurch gekennzeichnet, dass** der wenigstens eine Wärmeträgermediumdurchströmungsstutzen (50, 52) und der Abgasdurchströmungsstutzen (30) im Wesentlichen im gleichen axialen Bereich des Wärmetauschergehäuses (12) in Umfangsabstand zueinander vorgesehen sind.

4. Wärmetauscheranordnung nach einem der Ansprüche 1 bis 3,
**dadurch gekennzeichnet, dass** die Außenumfangswandung (18) in ihrem von der Außenbodenwandung (20) entfernt liegenden axialen Endbereich (44) bezüglich der Gehäuselängsachse (L) schräg endet.

5. Wärmetauscheranordnung nach einem der Ansprüche 1 bis 4,
**dadurch gekennzeichnet, dass** der wenigstens eine Wärmeträgermediumdurchströmungsstutzen (50, 52) im Wesentlichen vollständig in einem axial über den zweiten Umfangsbereich (42) der Außenumfangswandung (18) hinaus ragenden Bereich der Außenumfangswandung (18) im ersten Umfangsbereich (40) vorgesehen ist.

6. Wärmetauscheranordnung nach einem der Ansprüche 1 bis 5,
**dadurch gekennzeichnet, dass** an der Innenumfangswandung (22) des inneren Gehäuseteils (16) eine den Wärmeträgermediumströmungsraum in axialer Richtung begrenzende Stirnfläche (34) vorgesehen ist, wobei die Stirnfläche (34) in einem ersten Umfangsbereich (36) der Innenumfangswandung (22) einen größeren axialen Abstand zur Innenbodenwandung (24) aufweist und in einem zweiten Umfangsbereich (38) der Innenumfangswandung (22) einen geringeren axialen Abstand zur Innenbodenwandung (24) aufweist.

7. Wärmetauscheranordnung nach Anspruch 6,
**dadurch gekennzeichnet, dass** die Stirnfläche (34) bezüglich der Gehäuselängsachse (L) schräg angeordnet ist.

8. Wärmetauscheranordnung nach Anspruch 6 oder 7,
**dadurch gekennzeichnet, dass** das äußere Gehäuseteil (14) im Bereich der Stirnfläche (34) mit dem inneren Gehäuseteil (16) verbunden ist.

9. Wärmetauscheranordnung nach einem der Ansprüche 6 bis 8,
**dadurch gekennzeichnet, dass** der Abgasdurchströmungsstutzen (30) an der Innenumfangswandung (22) im Bereich des zweiten Umfangsbereichs (38) der Innenumfangswandung (22) vorgesehen ist.

10. Wärmetauscheranordnung nach einem der Ansprüche 6 bis 9,
**dadurch gekennzeichnet, dass** die Innenumfangswandung (22) zur Bereitstellung der Stirnfläche (34) eine vorzugsweise stufenartige Dickenzunahme aufweist.

11. Wärmetauscheranordnung nach einem der Ansprüche 1 bis 10,
**dadurch gekennzeichnet, dass** die Innenumfangswandung (22) in ihrem von der Innenbodenwandung (24) entfernten axialen Endbereich (28) im Wesentlichen orthogonal zur Gehäuselängsachse (L) endet.

12. Wärmetauscheranordnung nach einem der Ansprüche 1 bis 11,
**dadurch gekennzeichnet, dass** der Wärmeträgermediumströmungsraum nach radial außen im Wesentlichen nur durch die Außenumfangswandung (18) des äußeren Gehäuseteils (14) begrenzt ist.

13. Wärmetauscheranordnung nach einem der Ansprüche 1 bis 12,
**dadurch gekennzeichnet, dass** dass äußere Gehäuseteil (14) mit dem wenigstens einen Wärmeträgermediumdurchströmungsstutzen (50, 52) integral ausgebildet ist oder/und dass das innere Gehäuseteil (16) mit dem Abgasdurchströmungsstutzen (30) integral ausgebildet ist.

14. Wärmetauscheranordnung nach einem der Ansprüche 1 bis 13,
**dadurch gekennzeichnet, dass** das äußere Gehäuseteil (14) als Kunststoff-Spritzgussteil ausgebildet ist oder/und dass das innere Gehäuseteil (16) als Metall-Druckgussteil ausgebildet ist.

15. Fahrzeugheizgerät, umfassend einen mit Brennstoff und Verbrennungsluft zu speisenden Brennerbereich und eine Wärmetauscheranordnung (10) nach einem der vorhergehenden Ansprüche.

## Claims

1. Heat exchanger arrangement, in particular for a vehicle heating device, comprising a pot-like heat exchanger housing (12) extending in the direction of a housing longitudinal axis (L) with an outer wall (18, 20) and an inner wall (22, 24), a heat carrier medium flow space being formed between said outer wall (18, 20) and said inner wall (22, 24), at least one heat carrier medium flow connection piece (50, 52) which is open towards said heat carrier medium flow space being provided at said outer wall (18, 20) and an exhaust gas flow connection piece (30) which is open towards an inner space (26) of the heat exchanger housing (12) surrounded by said inner wall (22, 24) being provided at said heat exchanger housing (12), said heat exchanger housing (12) comprising an outer housing part (14) with an outer circumferential wall (18) and an outer bottom wall (20) as well as an inner housing part (16) with an inner circumferential wall (22) and an inner bottom wall (24), at least one heat carrier medium flow connection piece (50, 52) being provided at an axial end section (44) of said outer circumferential wall (18) of the outer housing part (14) remote to the outer bottom wall,
**characterised in that** in a first circumferential area (40) of said outer circumferential wall (18) the outer circumferential wall (18) is formed with a bigger extension length from the outer bottom wall (20) and **in that** in in a second circumferential area (42) of said outer circumferential wall (18) the outer circumferential wall (18) is formed with a smaller extension length from the outer bottom wall (20), the at least one heat carrier medium flow connection piece (50, 52) being provided in the area of the first circumferential area (40).

2. Heat exchanger arrangement according to claim 1,
**characterized in that** at said outer circumferential wall (18) two heat carrier medium flow connection pieces (50, 52) are provided substantially in the same axial area of the outer circumferential wall (18) in circumferential distance to each other.

3. Heat exchanger arrangement according to claim 1 or 2,
**characterized in that** the at least one heat carrier medium flow connection piece (50, 52) and the exhaust gas flow connection piece (30) are arranged substantially in the same axial area of said heat exchanger housing (12) in a circumferential distance to each other.

4. Heat exchanger arrangement according to one of claims 1 or 3,
**characterized in that** the outer circumferential wall (18) ends in an inclined way in relation to the housing longitudinal axis (L) in its axial end section (44) remote from the outer bottom wall (20).

5. Heat exchanger arrangement according to one of claims 1 to 4,
**characterized in that** the at least one heat carrier medium flow connection piece (50, 52) is provided substantially completely in an area extending axially beyond the second circumferential area (42) of the outer circumferential wall (18) in the first circumferential area (40).

6. Heat exchanger arrangement according to one of claims 1 to 5,
**characterized in that** a front surface (34) defining the heat carrier medium flow space in an axial direction is provided at the inner circumferential wall (22) of the inner housing part (16), the front surface (34) having in a first circumferential area (36) of the inner circumferential wall (22) a larger axial distance to the inner bottom wall (24) and in a second circumferential area (38) of the inner circumferential wall (22) a smaller axial distance to the inner bottom wall (24).

7. Heat exchanger arrangement according to claim 6,
**characterized in that** the front surface (34) is arranged in an inclined way in relation to the housing longitudinal axis (L).

8. Heat exchanger arrangement according to claim 6 or 7,
**characterized in that** the outer housing part (14) is connected to the inner housing part (16) in the area of the front surface (34).

9. Heat exchanger arrangement according to one of claims 6 to 8,
**characterized in that** the exhaust gas flow connection piece (30) is provided at the inner circumferential wall (22) in the area of the second circumferential area (38) of the inner circumferential wall (22).

10. Heat exchanger arrangement according to one of claims 6 to 9,
**characterized in that** the inner circumferential wall (22) preferably increases stepwise in thickness for providing the front surface (34).

11. Heat exchanger arrangement according to one of claims 1 to 10,
**characterized in that** the inner circumferential wall (22) ends substantially orthogonal to said housing longitudinal axis (L) in its axial end section (28) remote from the inner bottom wall (24).

12. Heat exchanger arrangement according to one of claims 1 to 11,
**characterized in that**, radially to the outside, a heat carrier medium flow space is substantially defined only by the outer circumferential wall (18) of the outer housing part (14).

13. Heat exchanger arrangement according to one of claims 1 to 12,
**characterized in that** the outer housing part (14) and the at least one heat carrier medium flow connection piece (50, 52) are formed integrally or/and that the inner housing part (16) and the exhaust gas flow connection piece (30) are formed integrally.

14. Heat exchanger arrangement according to one of claims 1 to 13,
**characterized in that** the outer housing part (14) is designed as a plastic-injection moulded part or/and **in that** the inner housing part (16) is designed as a metal pressure cast part.

15. Vehicle heating device, comprising a burner section to be fed with fuel and combustion air and a heat exchanger arrangement (10) according to one of the preceding claims.

## Revendications

1. Arrangement d'échangeur de chaleur, en particulier pour un dispositif de chauffage d'un véhicule, comprenant un boîtier d'échangeur de chaleur (12) en forme de pot, s'étendant dans la direction d'un axe longitudinal du boîtier (L), avec une paroi externe (18, 20) et une paroi interne (22, 24), un espace d'écoulement de medium porteur de chaleur étant formé entre la paroi externe (18, 20) et la paroi interne (22, 24), au moins une pièce de connexion d'écoulement de medium porteur de chaleur (50, 52) qui est ouverte envers l'espace d'écoulement de medium porteur de chaleur étant prévue à la paroi externe (18, 20) et une pièce de connexion d'écoulement de gaz d'échappement (30) qui est ouverte envers un espace interne (26) du boîtier d'échangeur de chaleur (12) entourée de la paroi interne (22, 24) étant prévue au boîtier d'échangeur de chaleur (12), le boîtier d'échangeur de chaleur (12) comprenant une part de boîtier externe (14) avec une paroi circonférentielle externe (18) et une paroi de fond externe (20) ainsi qu'une part de boîtier interne (16) avec une paroi circonférentielle interne (22) et une paroi de fond interne (24), au moins une pièce de connexion d'écoulement de medium porteur de chaleur (50, 52) étant prévue à une section d'extrémité axiale (44) de la paroi circonférentielle externe (18) de la part de boîtier externe (14) éloignée de la paroi de fond externe,
**caractérisé en ce que** dans une première zone circonférentielle (40) de la paroi circonférentielle externe (18) la paroi circonférentielle externe (18) est formée avec une plus grande longueur d'extension par rapport à la paroi de fond externe (20) et **en ce que** dans une deuxième zone circonférentielle (42) de la paroi circonférentielle externe (18) la paroi circonférentielle externe (18) est formée avec une plus petite longueur d'extension par rapport à la paroi de fond externe (20), ladite au moins une pièce de connexion d'écoulement de medium porteur de chaleur (50, 52) étant prévue dans la zone de la première zone circonférentielle (40).

2. Arrangement d'échangeur de chaleur selon la revendication 1, **caractérisé en ce que** à ladite paroi de fond externe (18), deux pièces de connexion d'écoulement de medium porteur de chaleur (50, 52) sont prévues essentiellement dans la même zone axiale de la paroi circonférentielle externe (18) avec une distance circonférentielle entre elles.

3. Arrangement d'échangeur de chaleur selon les revendications 1 ou 2, **caractérisé en ce que** ledit au moins une pièce de connexion d'écoulement de medium porteur de chaleur (50, 52) et la pièce de connexion d'écoulement de gaz d'échappement (30) sont prévues essentiellement dans la même zone axiale du boîtier d'échangeur de chaleur (12) avec une distance circonférentielle entre elles.

4. Arrangement d'échangeur de chaleur selon les revendications 1 à 3, **caractérisé en ce que** la paroi circonférentielle externe (18) est inclinée en relation à l'axe longitudinal du boîtier (L) dans sa section d'extrémité axiale (44) éloignée de la paroi de fond externe (20).

5. Arrangement d'échangeur de chaleur selon une des revendications 1 à 4, **caractérisé en ce que** ladite au moins une pièce de connexion d'écoulement de medium porteur de chaleur (50, 52) est prévue essentiellement de manière entière dans une zone de paroi circonférentielle externe (18) dans la première zone circonférentielle (40) qui s'étend axialement au-delà de la deuxième zone circonférentielle (42) de la paroi circonférentielle externe (18).

6. Arrangement d'échangeur de chaleur selon une des revendications 1 à 5, **caractérisé en ce qu'**une face frontale (34) définissant l'espace d'écoulement de medium porteur de chaleur dans une direction axiale est prévue à la paroi circonférentielle interne (22) de la part de boîtier interne (16), la face frontale (34) ayant dans une première zone circonférentielle (36) de la paroi circonférentielle interne (22) une plus grande distance axiale de la paroi de fond interne (24) et ayant dans une deuxième zone circonférentielle (38) de la paroi circonférentielle interne (22) une plus petite distance axiale de la paroi de fond interne (24).

7. Arrangement d'échangeur de chaleur selon la revendication 6, **caractérisé par** la face frontale (34) étant arrangée d'une manière inclinée par rapport à l'axe longitudinal du boîtier (L).

8. Arrangement d'échangeur de chaleur selon les revendications 6 ou 7, **caractérisé par** la part de boîtier externe (14) étant connectée à la part de boîtier interne (16) dans la zone de la face frontale (34).

9. Arrangement d'échangeur de chaleur selon une des revendications 6 à 8, **caractérisé par** la pièce de connexion d'écoulement de gaz d'échappement (30) étant prévue à la paroi circonférentielle interne (22) dans la zone de la deuxième zone circonférentielle (38) de la paroi circonférentielle interne (22).

10. Arrangement d'échangeur de chaleur selon une des revendications 6 à 9, **caractérisé par** la paroi circonférentielle interne (22) s'épaississant de préférence de type gradin pour prévoir la face frontale (34).

11. Arrangement d'échangeur de chaleur selon une des revendications 1 à 10, **caractérisé par** la paroi de fond interne (22) se terminant de façon orthogonale par rapport à l'axe longitudinal du boîtier (L) dans sa section d'extrémité axiale (28) éloignée de la paroi de fond interne (24).

12. Arrangement d'échangeur de chaleur selon une des revendications 1 à 11, **caractérisé par** l'espace d'écoulement de medium porteur de chaleur étant définie radialement vers l'extérieur pour l'essentiel seulement par la paroi circonférentielle externe (18) de la part de boîtier externe (14).

13. Arrangement d'échangeur de chaleur selon une des revendications 1 à 12, **caractérisé par** la part de boîtier externe (14) et ladite au moins une pièce de connexion d'écoulement de medium porteur de chaleur (50, 52) étant formé intégralement ou/et par la part de boîtier interne (16) et la pièce de connexion d'écoulement de gaz d'échappement (30) étant formé intégralement.

14. Arrangement d'échangeur de chaleur selon une des revendications 1 à 13, **caractérisé par** la part de boîtier externe (14) étant formée sous forme de pièce moulée par injection en matière plastique ou/et par la part de boîtier interne (16) étant formée sous forme de pièce moulée sous pression en métal.

15. Dispositif de chauffage pour un véhicule, comprenant une zone de combustion à alimenter en combustible et en air de combustion et un arrangement d'échangeur de chaleur (10) selon une des revendications précédentes.
